(19) Europäisches Patentamt
European Patent Office
Office européen des brevets

(11) **EP 4 535 152 A1**

(12) **EUROPEAN PATENT APPLICATION**

(43) Date of publication:
**09.04.2025 Bulletin 2025/15**

(21) Application number: **24150571.8**

(22) Date of filing: **05.01.2024**

(51) International Patent Classification (IPC):
**G06F 3/06** (2006.01)  **G06N 3/08** (2023.01)
**G06Q 10/0631** (2023.01)

(52) Cooperative Patent Classification (CPC):
**G06F 3/0607; G06F 3/0653; G06F 3/067;
G06N 3/08; G06N 20/00; G06Q 10/06315**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **03.10.2023 PCT/CN2023/123070**

(71) Applicant: **VMware LLC
Palo Alto, CA 94304 (US)**

(72) Inventors:
• **YANG, Yang
  Shanghai, 200433 (CN)**
• **YANG, Yang
  Shanghai, 200433 (CN)**
• **CHEN, Kai-Chia
  Shanghai, 200433 (CN)**
• **YANG, Sixuan
  Shanghai, 200433 (CN)**
• **FENG, Jin
  Shanghai, 200433 (CN)**

(74) Representative: **Dilg, Haeusler, Schindelmann
Patentanwaltsgesellschaft mbH
Leonrodstraße 58
80636 München (DE)**

(54) **METHOD AND SYSTEM TO PERFORM STORAGE CAPACITY PLANNING IN HYPER-CONVERGED INFRASTRUCTURE ENVIRONMENT**

(57) One example method to perform storage capacity planning in a hyper-converged infrastructure (HCI) environment is disclosed. The method includes obtaining historical storage capacity usage data of a set of virtual storage area network (vSAN) clusters, processing the historical storage capacity usage data to generate processed historical storage capacity usage data, training a machine learning model with the processed historical storage capacity usage data to generate a first trained machine learning model, and in response to a first vSAN cluster being newly deployed in the HCI environment, dispatching the first trained machine learning model to the first vSAN cluster.

Fig. 1

EP 4 535 152 A1

**Description**

BACKGROUND

A virtualization software suite for implementing and managing virtual infrastructures in a virtualized computing environment may include (1) a hypervisor that implements virtual machines (VMs) on one or more physical hosts, (2) a virtual storage area network (e.g., vSAN) software that aggregates local storage resources to form a shared datastore for a vSAN cluster of hosts, and (3) a management server software that centrally provisions and manages virtual datacenters, VMs, hosts, clusters, datastores, and virtual networks. For illustration purposes only, one example of the vSAN may be VMware vSAN™. The vSAN software may be implemented as part of the hypervisor software.

The vSAN software uses the concept of a disk group as a container for solid-state drives (SSDs) and non-SSDs, such as hard disk drives (HDDs). On each host (node) in a vSAN cluster, local drives are organized into one or more disk groups. Each disk group includes one SSD that serves as a read cache and write buffer (e.g., a cache tier), and one or more SSDs or non-SSDs that serve as permanent storage (e.g., a capacity tier). The disk groups from all nodes in the vSAN cluster may be aggregated to form a vSAN datastore distributed and shared across the nodes in the vSAN cluster.

The vSAN software stores and manages data in the form of data containers called objects. An object is a logical volume that has its data and metadata distributed across the vSAN cluster. For example, every virtual machine disk (VMDK) is an object, as is every snapshot. For namespace objects, the vSAN software leverages virtual machine file system (VMFS) as the file system to store files within the namespace objects. A virtual machine (VM) is provisioned on a vSAN datastore as a VM home namespace object, which stores metadata files of the VM including descriptor files for the VM's VMDKs.

Storage capacity planning is critical in a hyper-converged Infrastructure (HCI) environment. Generally, a user usually takes months to complete a procurement process to add new storage resources or remove failed storage resources for a vSAN cluster in the HCI environment. Therefore, without proper storage capacity planning, the vSAN cluster may exceed a storage capacity threshold before the new storage resources have obtained, which will affect the overall performance of the HCI environment such as performance downgrades, upgrade failures or service interruptions. In addition, given complicated storage activities (e.g., storage policies that are applied or going to apply, workload patterns, etc.) in the HCI environment, storage capacity planning in the HCI environment becomes more challenging.

BRIEF DESCRIPTION OF THE DRAWINGS

Fig. 1 illustrates an example system to perform storage capacity planning in a hyper-converged infrastructure (HCI) environment, in accordance with some embodiments of the present disclosure.

Fig. 2 illustrates a flowchart of an example process for a system in a HCI environment to perform storage capacity planning, in accordance with some embodiments of the present disclosure.

Fig. 3 illustrates a flowchart of an example process for a training data preprocessor to process storage capacity usage data before a machine learning model is trained based on the storage capacity usage data, in accordance with some embodiments of the present disclosure.

Fig. 4 is a block diagram of an illustrative embodiment of a computer program product for implementing the processes of Fig. 2 and Fig. 3, in accordance with some embodiments of the present disclosure.

DETAILED DESCRIPTION

In the following detailed description, reference is made to the accompanying drawings, which form a part hereof. In the drawings, similar symbols typically identify similar components, unless context dictates otherwise. The illustrative embodiments described in the detailed description, drawings, and claims are not meant to be limiting. Other embodiments may be utilized, and other changes may be made, without departing from the spirit or scope of the subject matter presented here. It will be readily understood that the aspects of the present disclosure, as generally described herein, and illustrated in the Figures, can be arranged, substituted, combined, and designed in a wide variety of different configurations, all of which are explicitly contemplated herein.

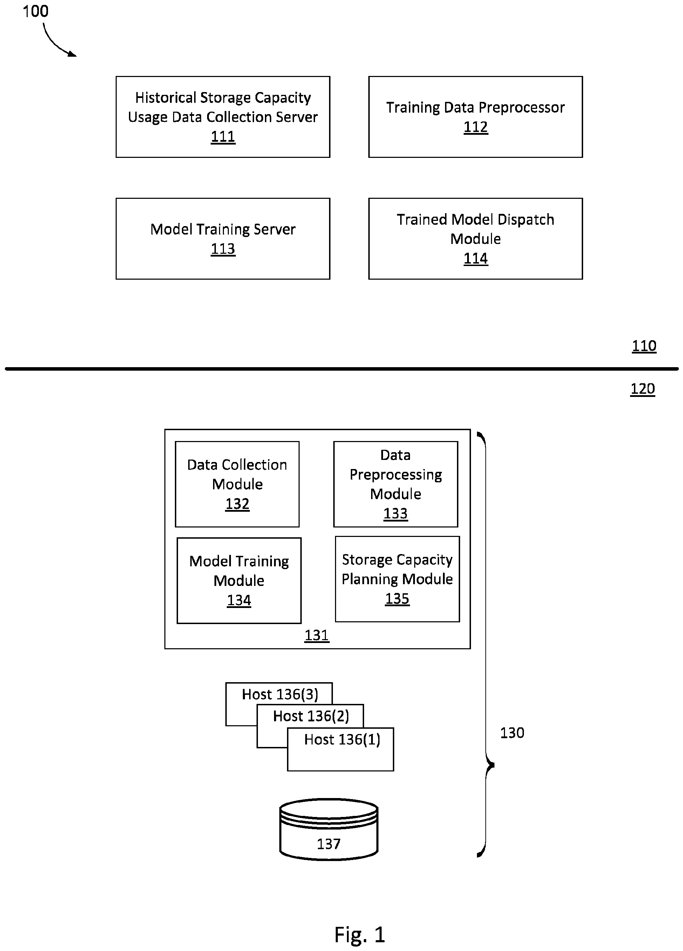

Fig. 1 illustrates an example system 100 to perform storage capacity planning in a hyper-converged infrastructure (HCI) environment, in accordance with some embodiments of the present disclosure. In some embodiments, system 100 includes cloud environment 110 and on-site system 120. In some embodiments, cloud environment 110 includes historical storage capacity usage data collection server 111, training data preprocessor 112, model training server 113 and trained model dispatch module 114.

In some embodiments, on-site system 120 includes one or more virtual storage area network (e.g., vSAN) clusters. On-site system 120 may include any number of vSAN clusters. For illustration purposes only, on-site system 120 includes vSAN cluster 130.

In some embodiments, vSAN cluster 130 includes management entity 131. Management entity 131 is configured to manage vSAN cluster 130. Management entity 131 further includes cluster-specific storage capacity usage data collection module 132, training data preprocessing module 133, cluster-specific model training module 134 and cluster-specific storage capacity planning module 135.

In some embodiments, vSAN cluster 130 further includes one or more hosts 136(1)...136(n). Each host of hosts 136(1)...136(n) includes suitable hardware, which includes any suitable components, such as processor (e.g., central processing unit (CPU)); memory (e.g., random access memory); network interface controllers (NICs) to provide network connection; storage controller that provides access to storage resources provided by each host of the first set of hosts. The storage resource may represent one or more disk groups. In practice, each disk group represents a management construct that combines one or more physical disks, such as hard disk drive (HDD), solid-state drive (SSD), solid-state hybrid drive (SSHD), peripheral component interconnect (PCI) based flash storage, serial advanced technology attachment (SATA) storage, serial attached small computer system interface (SAS) storage, Integrated Drive Electronics (IDE) disks, Universal Serial Bus (USB) storage, etc.

Through storage virtualization, hosts 136(1)...136(n) aggregate their respective local storage resources to form shared datastore 137 in vSAN cluster 130. Data stored in shared datastore 137 may be placed on, and accessed from, one or more of storage resources provided by any host of hosts 136(1)... 136(n).

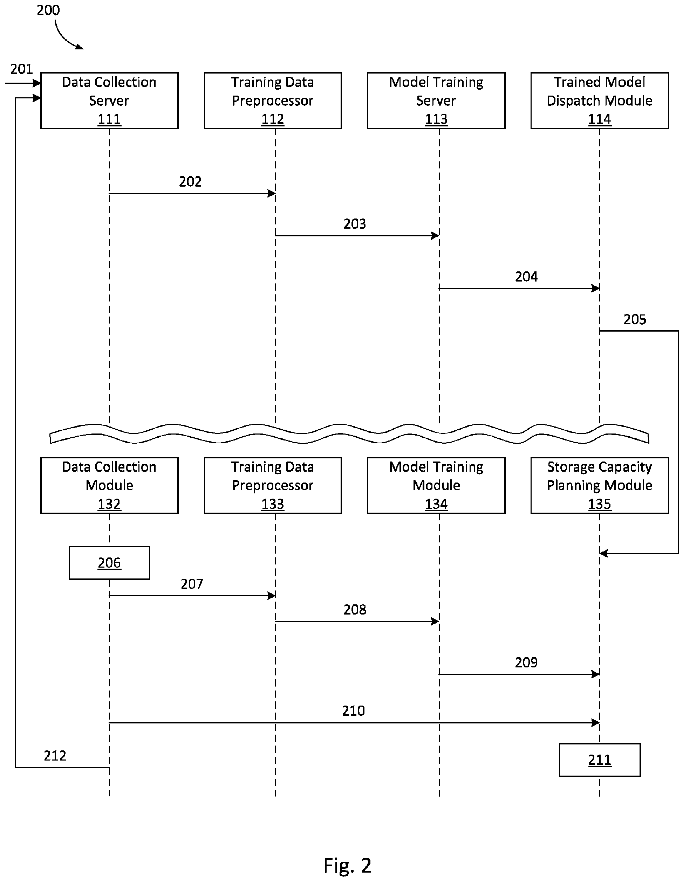

Fig. 2 illustrates a flowchart of example process 200 for a system in a HCI environment to perform storage capacity planning, in accordance with some embodiments of the present disclosure. Example process 200 may include one or more operations, functions, or actions illustrated by one or more steps, such as 201 to 212. The various steps may be combined into fewer steps, divided into additional steps, and/or eliminated depending on the desired implementation. In some embodiments, the system may correspond to system 100 of Fig. 1.

In some embodiments, process 200 may begin with step 201. In conjunction with Fig. 1, in step 201, historical storage capacity usage data collection server 111 is configured to obtain storage capacity usage data of one or more clusters. For example, historical storage capacity usage data collection server 111 is configured to obtain storage capacity usage data of all available clusters (not illustrated for simplicity) other than cluster 130.

In some embodiments, step 201 may be followed by step 202. In conjunction with Fig. 1, in step 202, training data preprocessor 112 is configured to retrieve historical storage capacity usage data of all available clusters from historical storage capacity usage data collection server 111. In response to retrieving the historical storage capacity usage data, training data preprocessor 112 is configured to further process the retrieved historical storage capacity usage data before a machine learning model is trained based on the historical storage capacity usage data.

In some embodiments, step 202 may be followed by step 203. In conjunction with Fig. 1, in step 203, model training server 113 is configured to receive processed historical storage capacity usage data from training data preprocessor 112 as an input to train a machine learning model. In some embodiments, the machine learning model includes a long short-term memory (LSTM) network. Model training server 113 is configured to output a trained machine learning model. The trained machine learning model is configured to perform storage capacity planning operations.

In some embodiments, step 203 may be followed by step 204. In conjunction with Fig. 1, in step 204, trained model dispatch module 114 is configured to receive the trained machine learning model being output by machine learning model training server 113.

In some embodiments, step 204 may be followed by step 205. In conjunction with Fig. 1, in step 205, in response to cluster 130 being newly deployed in on-site system 120, trained model dispatch module 114 is configured to dispatch the trained machine learning model to cluster-specific storage capacity planning module 135.

In some embodiments, step 205 may be followed by step 206. In conjunction with Fig. 1, in step 206, in response to cluster 130 being deployed, cluster-specific storage capacity usage data collection module 132 is configured to obtain storage capacity usage data of cluster 130 but not storage capacity usage data of any other cluster.

In some embodiments, step 206 may be followed by step 207. In conjunction with Fig. 1, in step 207, training data preprocessing module 133 is configured to retrieve storage capacity usage data of cluster 130 from cluster-specific storage capacity usage data collection module 132. In response to retrieving the storage capacity usage data of cluster 130, training data preprocessing module 133 is configured to further process the retrieved storage capacity usage data before the machine learning model dispatched to cluster-specific storage capacity planning module 135 is further trained based on storage capacity usage data of cluster 130.

In some embodiments, step 207 may be followed by step 208. In conjunction with Fig. 1, in step 208, cluster-specific model training module 134 is configured to receive processed storage capacity usage data of cluster 130 from training data preprocessing module 133 as an input to train the dispatched machine learning model. Cluster-specific model training module 134 is configured to output a trained machine learning model specific to cluster 130.

In some embodiments, step 208 may be followed by step 209. In conjunction with Fig. 1, in step 209, cluster-specific storage capacity planning module 135 is configured to retrieve the trained machine learning model specific to cluster 130 and replace the dispatched machine learning model with the trained machine learning model specific to cluster 130.

In some embodiments, step 209 may be followed by step 210. In conjunction with Fig. 1, in step 210, cluster-specific storage capacity planning module 135 is configured to retrieve storage capacity usage data of cluster 130 from cluster-specific storage capacity usage data collection module 132 as an input to the trained machine learning model specific to cluster 130.

In some embodiments, step 210 may be followed by step 211. Cluster-specific storage capacity planning module 135 is configured to generate a prediction of storage capacity usage of cluster 130 based on the retrieved storage capacity usage data of cluster 130. In some embodiments, the prediction is an output of the trained machine learning model specific to cluster 130.

In some embodiments, step 211 may be followed by step 212. In conjunction with Fig. 1, in step 212, historical storage capacity usage data collection server 111 is configured to obtain storage capacity usage data of cluster 130 from cluster-specific storage capacity usage database 132.

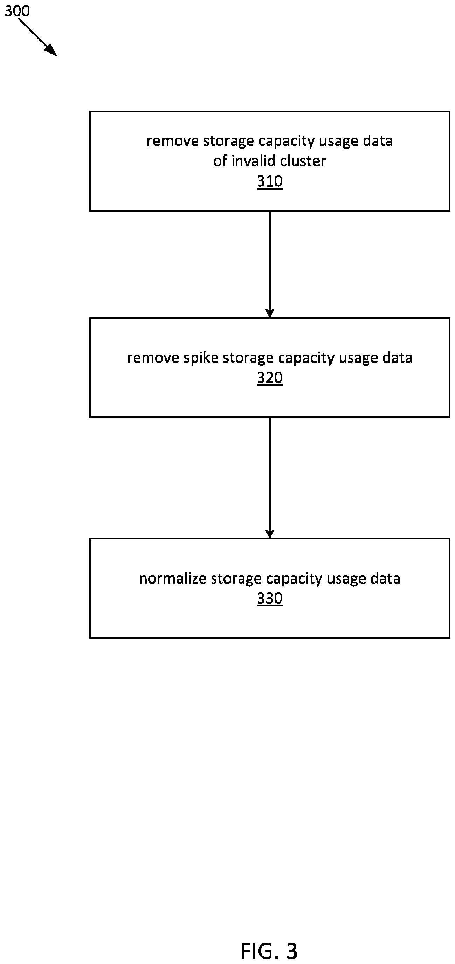

Fig. 3 illustrates a flowchart of example process 300 for a training data preprocessor to process storage capacity usage data before a machine learning model is trained based on the storage capacity usage data, in accordance with some embodiments of the present disclosure. Example process 300 may include one or more operations, functions, or actions illustrated by one or more blocks, such as 310 to 330. The various blocks may be combined into fewer blocks, divided into additional blocks, and/or eliminated depending on the desired implementation. In some embodiments, the training data preprocessor may correspond to training data preprocessor 112 in Fig. 1.

Process 300 may begin with block 310 "remove storage capacity usage data of invalid cluster". In some embodiments, in conjunction with Fig. 1, at block 310, training data preprocessor 112 is configured to remove historical storage capacity usage data of an invalid cluster from further processing.

In some embodiments, a cluster which provides its storage capacity usage data to historical storage capacity usage data collection server 111 less than a number of days annually is determined to be an invalid cluster. For example, an invalid cluster can be a cluster providing its storage capacity usage data less than 180 days annually.

In some other embodiments, a cluster failing to provide any of its storage capacity usage data to historical storage capacity usage data collection server 111 within a threshold time period is determined to be an invalid cluster. For example, an invalid cluster can be a cluster failing to provide any of its storage capacity usage data in the past 30 days.

In some yet other embodiments, a cluster failing to provide any of its storage capacity usage data to historical storage capacity usage data collection server 111 for a consecutive threshold time period is determined to be an invalid cluster. For example, an invalid cluster can be a cluster failing to provide any of its storage capacity usage data for consecutive 15 days.

Process 300 may be followed by block 320 "remove spike storage capacity usage data". In some embodiments, in conjunction with Fig. 1, at block 320, training data preprocessor 112 is configured to remove spike storage capacity usage data from further processing.

In some embodiments, assuming a time-series storage capacity usage data of [105, 104, 103, 150, 101, 100]. 105 represents 105 terabytes (TB) of storage capacity usage of a cluster on Day 1, 104 represents 104 TB of storage capacity usage of the cluster on Day 2, 103 represents 103 TB of storage capacity usage of the cluster on Day 3, 150 represents 150 TB of storage capacity usage of the cluster on Day 4, 101 represents 101 TB of storage capacity usage of the cluster on Day 5 and 100 represents 100 TB of storage capacity usage of the cluster on Day 6. In conjunction with Fig. 1, training data preprocessor 112 is configured to obtain the time-series storage capacity usage data of [105, 104, 103, 150, 101, 100] from historical storage capacity usage data collection server 111.

In some embodiments, training data preprocessor 112 is configured to calculate a "total difference" associated with the time-series storage capacity usage data. The "total difference" may be an absolute value of a difference between the last number (i.e., 100) of the time-series storage capacity usage data and the first number (i.e., 105) of time-series storage capacity usage data. Therefore, the "total difference" associated with the time-series storage capacity usage data is |100 - 105| = 5.

In some embodiments, training data preprocessor 112 is configured to calculate a set of "range difference" for a data in the time-series storage capacity usage data according to a "range length." For example, assuming the "range length" is 3, training data preprocessor 112 is configured to calculate a first set of "range difference" of |104 - 105|, |103 - 105| and |150 - 105| for the first number 105 in the time-series storage capacity usage data. Similarly, training data preprocessor 112 is also configured to calculate a second set of "range difference" of |103 - 104|, |150 - 104| and |101 - 104| for the second number 104 in the time-series storage capacity usage data and a third set of "range difference" of |150 - 103|, |101 - 103| and |100 - 103| for the third number 103 in the time-series storage capacity usage data. In some embodiments, training data preprocessor 112 is configured to determine a spike exists in response to a "range difference" is greater than the "total difference". Accordingly, training data preprocessor 112 is configured to determine a first spike exists in response to that |150 - 1051 greater than the total difference of 5, a second spike exists in response to that |150 - 104| greater than the total difference of 5 and a third spike exists in response to that |150 - 103| greater than the total difference of 5. In some embodiments, in response to the number 150 is associated with all of the first spike, second spike and third spike, training data preprocessor 112 is configured to determine that number 150 is a spike data in the time-series storage capacity usage data and remove number 150 from the time-series storage capacity usage data for further processing.

Process 300 may be followed by block 330 "normalize storage capacity usage data". In some embodiments, in conjunction with Fig. 1, at block 330, training data preprocessor 112 is configured to normalize the storage capacity usage data not having been removed at blocks 310 and 320.

Following the example time-series storage capacity usage data above, in some embodiments, at block 330, in conjunction with Fig. 1, training data preprocessor 112 is configured to normalize time-series storage capacity usage data of [105, 104, 103, 101, 100] after number 150 is removed at block 320. In some embodiments, training data preprocessor 112 is configured to normalize the time-series storage capacity usage data so that any value of in the time-series storage capacity usage data will be between 0 to 1 after being normalized.

In some embodiments, training data preprocessor 112 is configured to identify the maximum and the minimum values from the time-series storage capacity usage data of [105, 104, 103, 101, 100]. Therefore, the maximum value is 105 and the minimum value is 100. In some embodiments, training data preprocessor 112 is configured to normalize a value X in the time-series storage capacity usage data based on the following equation: normalized

$$X = \frac{(X - minimum\ value)}{(maximum\ value - minimum\ value)}$$

. Accordingly, the time-series storage capacity usage data is normalized as

$$\left[ \frac{(105-100)}{(105-100)}, \frac{(104-100)}{(105-100)}, \frac{(103-100)}{(105-100)}, \frac{(101-100)}{(105-100)}, \frac{(100-100)}{(105-100)} \right]$$

, which is [1, 0.8, 0.6, 0.2, 0].

In some embodiments, in conjunction with Fig. 1, model training server 113 is configured to train a machine learning model using the normalized time-series storage capacity usage data of [1, 0.8, 0.6, 0.2, 0] as an input.

In some embodiments, in conjunction with Fig. 1, training data preprocessing module 133 is configured to perform similar operations performed by training data preprocessor 112 in Fig. 3. Training data preprocessing module 133 is configured to process storage capacity usage data of cluster 130 obtained from cluster-specific storage capacity usage data collection module 132 before a machine learning model dispatched to cluster 130 is further trained based on storage capacity usage data of cluster 130. However, in some embodiments, training data preprocessing module 133 is configured to perform a process including operations 320 and 330 but not including operation 310.

The above examples can be implemented by hardware (including hardware logic circuitry), software or firmware or a combination thereof. The above examples may be implemented by any suitable computing device, computer system, etc. The computer system may include processor(s), memory unit(s) and physical NIC(s) that may communicate with each other via a communication bus, etc. The computer system may include a non-transitory computer-readable medium having stored thereon instructions or program code that, when executed by the processor, cause the processor to perform process(es) described herein with reference to Fig. 2 to Fig. 3.

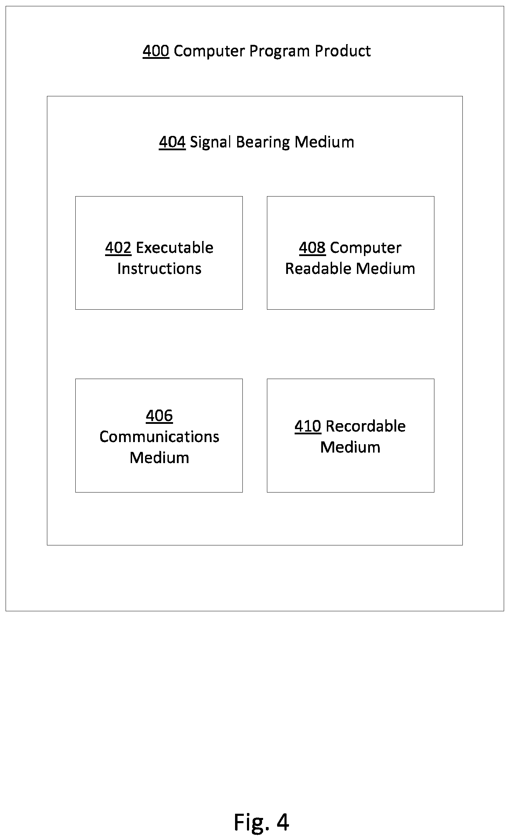

Fig. 4 is a block diagram of an illustrative embodiment of a computer program product 400 for implementing process 200 of Fig. 2 and process 300 of Fig. 3, in accordance with some embodiments of the present disclosure. Computer program product 400 may include a signal bearing medium 404. Signal bearing medium 404 may include one or more sets of executable instructions 402 that, in response to execution by, for example, one or more processors of hosts 136(1) to 136(3) and/or historical storage capacity usage data collection server 111, training data preprocessor 112, model training server 113 and trained model dispatch module 114 of Fig. 1, may provide at least the functionality described above with respect to Fig. 2 and Fig. 3.

In some implementations, signal bearing medium 404 may encompass a non-transitory computer readable medium 408, such as, but not limited to, a solid-state drive, a hard disk drive, a Compact Disc (CD), a Digital Video Disk (DVD), a digital tape, memory, etc. In some implementations, signal bearing medium 404 may encompass a recordable medium 410, such as, but not limited to, memory, read/write (R/W) CDs, R/W DVDs, etc. In some implementations, signal bearing medium 404 may encompass a communications medium 406, such as, but not limited to, a digital and/or an analog communication medium (e.g., a fiber optic cable, a waveguide, a wired communications link, a wireless communication link, etc.). Computer program product 400 may be recorded on non-transitory computer readable medium 408 or another similar recordable medium 410.

The techniques introduced above can be implemented in special-purpose hardwired circuitry, in software and/or firmware in conjunction with programmable circuitry, or in a combination thereof. Special-purpose hardwired circuitry may be in the form of, for example, one or more application-specific integrated circuits (ASICs), programmable logic devices (PLDs), field-programmable gate arrays (FPGAs), and others. The term 'processor' is to be interpreted broadly to include a processing unit, ASIC, logic unit, or programmable gate array etc.

The foregoing detailed description has set forth various embodiments of the devices and/or processes via the use of block diagrams, flowcharts, and/or examples. Insofar as such block diagrams, flowcharts, and/or examples contain one or more functions and/or operations, it will be understood by those within the art that each function and/or operation within such block diagrams, flowcharts, or examples can be implemented, individually and/or collectively, by a wide range of hardware, software, firmware, or any combination thereof.

Those skilled in the art will recognize that some aspects of the embodiments disclosed herein, in whole or in part, can be equivalently implemented in integrated circuits, as one or more computer programs running on one or more computers (e.g., as one or more programs running on one or more computing systems), as one or more programs running on one or more processors (e.g., as one or more programs running on one or more microprocessors), as firmware, or as virtually any combination thereof, and that designing the circuitry and/or writing the code for the software and or firmware would be well within the skill of one of skill in the art in light of this disclosure.

Software and/or to implement the techniques introduced here may be stored on a non-transitory computer-readable storage medium and may be executed by one or more general-purpose or special-purpose programmable microprocessors. A "computer-readable storage medium", as the term is used herein, includes any mechanism that provides (i.e., stores and/or transmits) information in a form accessible by a machine (e.g., a computer, network device, personal digital assistant (PDA), mobile device, manufacturing tool, any device with a set of one or more processors, etc.). A computer-readable storage medium may include recordable/non recordable media (e.g., read-only memory (ROM), random access memory (RAM), magnetic disk or optical storage media, flash memory devices, etc.).

The drawings are only illustrations of an example, wherein the units or procedure shown in the drawings are not necessarily essential for implementing the present disclosure. Those skilled in the art will understand that the units in the device in the examples can be arranged in the device in the examples as described, or can be alternatively located in one or more devices different from that in the examples. The units in the examples described can be combined into one module or further divided into a plurality of sub-units.

**Claims**

1. A method to perform storage capacity planning in a hyper-converged infrastructure (HCI) environment, the method comprising:

   obtaining historical storage capacity usage data of a set of virtual storage area network (vSAN) clusters;
   prior to training a machine learning model, processing the historical storage capacity usage data to generate processed historical storage capacity usage data;
   training the machine learning model with the processed historical storage capacity usage data;
   after the training, generating a first trained machine learning model; and
   in response to a first vSAN cluster being newly deployed in the HCI environment, dispatching the first trained machine learning model to the first vSAN cluster, wherein the first vSAN cluster is not part of the set of vSAN clusters.

2. The method of claim 1, further comprising:

   obtaining storage capacity usage data of the first vSAN cluster;
   prior to further training the first trained machine learning model, processing the storage capacity usage data of the first vSAN cluster to generate processed storage capacity usage data of the first vSAN cluster;
   training the first trained machine learning model with the processed storage capacity usage data of the first vSAN cluster;
   after training the first trained machine learning model, generating a second trained machine learning model specific to the first cluster; and
   performing the storage capacity planning for the first vSAN cluster based on the processed storage capacity usage data of the first vSAN cluster and the second trained machine learning model;

   wherein optionally the first trained machine learning model is generated in a cloud environment and the second trained machine learning model is generated in an on-premise system.

3. The method of any of claims 1 to 2, wherein processing the historical storage capacity usage data includes removing historical storage capacity usage data of an invalid cluster in the HCI environment to generate historical storage capacity usage data of valid clusters, wherein optionally processing the historical storage capacity usage data further includes removing a first spike storage capacity usage data from the historical storage capacity usage data of valid clusters and, after removing the first spike storage capacity usage data, normalizing the rest data in the historical storage capacity usage data of valid clusters.

4. The method of any of claims 2 to 3, wherein processing the storage capacity usage data of the first vSAN cluster includes removing a second spike storage capacity usage data from storage capacity usage data of the first vSAN cluster and, after removing the second spike storage capacity usage data, normalizing the rest data in the storage capacity usage data of the first vSAN cluster.

5. The method of any of claims 2 to 4, further comprising transmitting the storage capacity usage data of the first vSAN cluster to the cloud environment.

6. A non-transitory computer-readable storage medium that includes a set of instructions which, in response to execution by a processor of a computer system, cause the processor to perform a method of storage capacity planning in a hyper-converged infrastructure (HCI) environment, the method comprising:

   obtaining historical storage capacity usage data of a set of virtual storage area network (vSAN) clusters;
   prior to training a machine learning model, processing the historical storage capacity usage data to generate processed historical storage capacity usage data;
   training the machine learning model with the processed historical storage capacity usage data;
   after the training, generating a first trained machine learning model; and
   in response to a first vSAN cluster being newly deployed in the HCI environment, dispatching the first trained machine learning model to the first vSAN cluster, wherein the first vSAN cluster is not part of the set of vSAN clusters.

7. The non-transitory computer-readable storage medium of claim 6, wherein the non-transitory computer-readable storage medium includes additional instructions which, in response to execution by the processor, cause the processor to perform:

   obtaining storage capacity usage data of the first vSAN cluster;
   prior to further training the first trained machine learning model, processing the storage capacity usage data of the first vSAN cluster to generate processed storage capacity usage data of the first vSAN cluster;
   training the first trained machine learning model with the processed storage capacity usage data of the first vSAN cluster;
   after training the first trained machine learning model, generating a second trained machine learning model specific to the first cluster; and
   performing the storage capacity planning for the first vSAN cluster based on the processed storage capacity usage data of the first vSAN cluster and the second trained machine learning model;

   wherein optionally the first trained machine learning model is generated in a cloud environment and the second trained machine learning model is generated in an on-premise system.

8. The non-transitory computer-readable storage medium of any of claims 6 to 7, wherein the non-transitory computer-readable storage medium includes additional instructions which, in response to execution by the processor, cause the processor to perform:
   removing historical storage capacity usage data of an invalid cluster in the HCI environment to generate historical storage capacity usage data of valid clusters, wherein optionally the non-transitory computer-readable storage medium includes additional instructions which, in response to execution by the processor, cause the processor to perform:
   removing a first spike storage capacity usage data from the historical storage capacity usage data of valid clusters and, after removing the first spike storage capacity usage data, normalizing the rest data in the historical storage capacity usage data of valid clusters.

9. The non-transitory computer-readable storage medium of any of claims 7 to 8, wherein the non-transitory computer-readable storage medium includes additional instructions which, in response to execution by the processor, cause the processor to perform:
   removing a second spike storage capacity usage data from storage capacity usage data of the first vSAN cluster and, after removing the second spike storage capacity usage data, normalizing the rest data in the storage capacity usage data of the first vSAN cluster.

10. The non-transitory computer-readable storage medium of any of claims 7 to 9, wherein the non-transitory computer-readable storage medium includes additional instructions which, in response to execution by the processor, cause the processor to perform:
transmitting the storage capacity usage data of the first vSAN cluster to the cloud environment.

11. A system in a hyper-converged infrastructure (HCI) environment, comprising:

a first processor; and
a first non-transitory computer-readable medium having stored thereon instructions that, in response to execution by the first processor, cause the first processor to:

obtain historical storage capacity usage data of a set of virtual storage area network (vSAN) clusters;
prior to training a machine learning model, process the historical storage capacity usage data to generate processed historical storage capacity usage data;
train the machine learning model with the processed historical storage capacity usage data;
after the training, generate a first trained machine learning model; and
in response to a first vSAN cluster being newly deployed in the HCI environment, dispatch the first trained machine learning model to the first vSAN cluster, wherein the first vSAN cluster is not part of the set of vSAN clusters.

12. The system of claim 11, further comprising:

a second processor; and
a second non-transitory computer-readable medium having stored thereon instructions that, in response to execution by the second processor, cause the second processor to:

obtain storage capacity usage data of the first vSAN cluster;
prior to further training the first trained machine learning model, process the storage capacity usage data of the first vSAN cluster to generate processed storage capacity usage data of the first vSAN cluster;
train the first trained machine learning model with the processed storage capacity usage data of the first vSAN cluster;
after training the first trained machine learning model, generate a second trained machine learning model specific to the first cluster; and
perform the storage capacity planning for the first vSAN cluster based on the processed storage capacity usage data of the first vSAN cluster and the second trained machine learning model;

wherein optionally the first trained machine learning model is generated in a cloud environment and the second trained machine learning model is generated in an on-premise system.

13. The system of any of claims 11 to 12, wherein the first non-transitory computer-readable medium has stored thereon additional instructions that, in response to execution by first the processor, cause the first processor to:
remove historical storage capacity usage data of an invalid cluster in the HCI environment to generate historical storage capacity usage data of valid clusters.

14. The system of claim 13, wherein the first non-transitory computer-readable medium has stored thereon additional instructions that, in response to execution by first the processor, cause the first processor to:
remove a first spike storage capacity usage data from the historical storage capacity usage data of valid clusters and, after removing the first spike storage capacity usage data, normalize the rest data in the historical storage capacity usage data of valid clusters.

15. The system of any of claims 12 to 14, wherein the second non-transitory computer-readable medium has stored thereon additional instructions that, in response to execution by second the processor, cause the second processor to:
remove a second spike storage capacity usage data from storage capacity usage data of the first vSAN cluster and, after removing the second spike storage capacity usage data, normalize the rest data in the storage capacity usage data of the first vSAN cluster.

100

| | |
|---|---|
| Historical Storage Capacity Usage Data Collection Server 111 | Training Data Preprocessor 112 |
| Model Training Server 113 | Trained Model Dispatch Module 114 |

110

120

| Data Collection Module 132 | Data Preprocessing Module 133 |
|---|---|
| Model Training Module 134 | Storage Capacity Planning Module 135 |

131

Host 136(3)

Host 136(2)

Host 136(1)

130

137

Fig. 1

200

201

| Data Collection Server 111 | Training Data Preprocessor 112 | Model Training Server 113 | Trained Model Dispatch Module 114 |
|---|---|---|---|

202

203

204

205

| Data Collection Module 132 | Training Data Preprocessor 133 | Model Training Module 134 | Storage Capacity Planning Module 135 |
|---|---|---|---|

206

207

208

209

210

212

211

Fig. 2

300

remove storage capacity usage data
of invalid cluster
310

remove spike storage capacity usage data
320

normalize storage capacity usage data
330

FIG. 3

**400** Computer Program Product

**404** Signal Bearing Medium

**402** Executable Instructions

**408** Computer Readable Medium

**406** Communications Medium

**410** Recordable Medium

Fig. 4

| Europäisches Patentamt European Patent Office Office européen des brevets | **EUROPEAN SEARCH REPORT** | Application Number EP 24 15 0571 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/253689 A1 (LANGE KLAUS-DIETER [US] ET AL) 11 August 2022 (2022-08-11) * figures 1-8 * * paragraph [0001] - paragraph [0059] * ----- | 1-15 | INV. G06F3/06 G06N3/08 G06Q10/0631 |
| A | WO 2020/037162 A1 (VMWARE INC [US]) 20 February 2020 (2020-02-20) * paragraph [0003] * ----- | 1-15 | |
| A | US 2021/344695 A1 (PALANI SUBA [IN] ET AL) 4 November 2021 (2021-11-04) * paragraph [0032] * ----- | 1-15 | |
| A | CN 115 940 132 A (HUANENG CLEAN ENERGY RES INST) 7 April 2023 (2023-04-07) * paragraph [0016] - paragraph [0017] * ----- | 1-15 | |

| | | | TECHNICAL FIELDS SEARCHED (IPC) |
|---|---|---|---|
| | | | G06F G06N G06Q |

The present search report has been drawn up for all claims

| Place of search | Date of completion of the search | Examiner |
|---|---|---|
| The Hague | 27 May 2024 | Andlauer, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 535 152 A1**

## ANNEX TO THE EUROPEAN SEARCH REPORT
## ON EUROPEAN PATENT APPLICATION NO.

EP 24 15 0571

This annex lists the patent family members relating to the patent documents cited in the above-mentioned European search report.
The members are as contained in the European Patent Office EDP file on
The European Patent Office is in no way liable for these particulars which are merely given for the purpose of information.

27-05-2024

| Patent document cited in search report | | Publication date | Patent family member(s) | | Publication date |
|---|---|---|---|---|---|
| US 2022253689 | A1 | 11-08-2022 | NONE | | |
| WO 2020037162 | A1 | 20-02-2020 | CN | 112513816 A | 16-03-2021 |
| | | | CN | 115269184 A | 01-11-2022 |
| | | | EP | 3811214 A1 | 28-04-2021 |
| | | | EP | 4213023 A1 | 19-07-2023 |
| | | | US | 2020057676 A1 | 20-02-2020 |
| | | | US | 2020379817 A1 | 03-12-2020 |
| | | | US | 2022245002 A1 | 04-08-2022 |
| | | | WO | 2020037162 A1 | 20-02-2020 |
| US 2021344695 | A1 | 04-11-2021 | NONE | | |
| CN 115940132 | A | 07-04-2023 | NONE | | |

EPO FORM P0459

For more details about this annex : see Official Journal of the European Patent Office, No. 12/82